# EUROPEAN PATENT APPLICATION

(11) **EP 4 671 888 A1**
(43) Date of publication of application: **31.12.2025**
(21) Application number: 23854232.8
(22) Date of filing: 01.08.2023
(51) Int. Cl.: G05B 19/418, H04L 9/40, G21D 3/04

(54) **GLOBAL DATA CONTROL METHOD AND APPARATUS FOR NETWORK SECURITY OF INDUSTRIAL CONTROL SYSTEM OF NUCLEAR POWER PLANT**

(30) Priority: 24.02.2023 CN 202310207102
(71) Applicant: China Nuclear Power Engineering Co., Ltd., Shenzhen, Guangdong 518124 (CN); China Nuclear Power Design Company Ltd. (Shenzhen), Shenzhen, Guangdong 518172 (CN); China General Nuclear Power Corporation, Shenzhen, Guangdong 518028 (CN); CGN Power Co., Ltd., Shenzen, Guangdong 518028 (CN)
(72) Inventor: YAN, Zhenyu, Shenzhen, Guangdong 518124 (CN); LI, Lei, Shenzhen, Guangdong 518124 (CN); WANG, Biyao, Shenzhen, Guangdong 518124 (CN); HUANG, Yongcheng, Shenzhen, Guangdong 518124 (CN); ZHANG, Longqiang, Shenzhen, Guangdong 518124 (CN); XU, Liangjun, Shenzhen, Guangdong 518124 (CN); ZHAO, Yanfeng, Shenzhen, Guangdong 518124 (CN); XI, Chuhao, Shenzhen, Guangdong 518124 (CN)
(74) Representative: Noble, Nicholas
(86) International application number: PCT/CN2023/110486
(87) International publication number: WO 2024/037328

(57) **Abstract**

The present application relates to a global data control method and apparatus for a cybersecurity of nuclear power plant industrial control systems, a central control device and a storage medium. The method comprises: acquiring nuclear power management data of a nuclear power management server cluster, the nuclear power management data comprising cybersecurity data of the nuclear power plant industrial control system; acquiring operating data of at least two nuclear power industrial control system clusters through a system cluster port-side isolation device, a cluster spatial isolation device being configured between adjacent nuclear power plant system clusters; processing the operating data and the nuclear power management data to obtain global control data of the nuclear power plant; and transmitting the global control data from a jurisdiction area within the nuclear power plant to a jurisdiction area outside the nuclear power plant through a control side isolation device (as shown in FIG. 2).

## Description

### CROSS REFERENCE TO RELATED APPLICATION

The present application claims priority to Chinese Patent Application No. 202310207102X, titled "Global Data Control Method and Apparatus for Cybersecurity of Nuclear Power Plant Industrial Control Systems", and filed on February 24, 2023, the content of which is expressly incorporated herein by reference in its entirety.

### TECHNICAL FIELD

The present application relates to the field of computer technology, and particularly to a global data control method and apparatus for cybersecurity of nuclear power plant industrial control systems.

### BACKGROUND

With the development of science and technology and industry, in order to realize sustainable development, people pay more and more attention to environmental problems, and the proportion of traditional energy sources becomes less and less. Nuclear energy emerges as a new energy source.

Compared to traditional energy sources, nuclear energy is not only environmentally friendly, but can also provide a large number of energy sources. Accordingly, nuclear energy will be the main energy supply in the future. As an important nerve center for converting nuclear energy into electric energy, the nuclear power plant industrial control systems not only undertake an automatic control function of electric power production, but also undertakes a core function of nuclear safeguard. However, with the wide applications of informatization, digitization and intelligent technologies in the digitizer control systems of the nuclear power plant, the industrial control systems of the nuclear power plant suffer a cybersecurity threat, which affects the cybersecurity and nuclear safety of the nuclear power plant. Therefore, how to centrally manage and control the cybersecurity of all industrial control systems in the nuclear power plant, and how to cope with the cybersecurity threat become urgent problems to be solved.

### SUMMARY

In view of this, for the above technical problems, it is necessary to provide a global data control method and apparatus for a cybersecurity of nuclear power plant industrial control systems capable of perceiving and manipulating the overall situation of the nuclear power plant.

In the first aspect of the present application, a global data control method for a cybersecurity of nuclear power plant industrial control systems is provided, including:
acquiring nuclear power management data of a nuclear power management server cluster, the nuclear power management data comprising cybersecurity data of the nuclear power plant industrial control system;
acquiring operating data of at least two nuclear power plant industrial control system clusters through a system cluster port-side isolation device, a cluster spatial isolation device being configured between adjacent nuclear power plant system clusters;
processing the operating data and the nuclear power management data to obtain global control data of the nuclear power plant;
transmitting the global control data from a jurisdiction area within the nuclear power plant to a jurisdiction area outside the nuclear power plant through a control side isolation device.

In an embodiment, the acquiring the operating data of at least two nuclear power industrial control system clusters through the system cluster port-side isolation device includes:
acquiring operating data of each nuclear power industrial control system cluster through the system cluster port-side isolation device corresponding to each nuclear power industrial control system cluster;
the system cluster port-side isolation device corresponding to each nuclear power industrial control system cluster is determined according to a security level of each nuclear power industrial control system cluster, and the security level is directly proportional to a data unidirectional transmission isolation capability of the system cluster port-side isolation device.

In an embodiment, the cluster spatial isolation device configured between adjacent nuclear power plant system clusters is determined according to a similarity of security levels of the adjacent nuclear power plant system clusters, and the similarity of the security levels is inversely proportional to a data unidirectional transmission isolation capability of the cluster spatial isolation device.

In an embodiment, the transmitting the global control data from the jurisdiction area within the nuclear power plant to the jurisdiction area outside the nuclear power plant through the control side isolation device includes:
transmitting the global control data from the jurisdiction area within the nuclear power plant to the jurisdiction area outside the nuclear power plant through a first control side isolation device and a second control side isolation device in sequence, wherein the first control side isolation device is located between a production area and an office area in the jurisdiction area within the nuclear power plant, the second control side isolation device is located between the office area in the jurisdiction area within the nuclear power plant and the jurisdiction area outside the nuclear power plant, and a data unidirectional transmission isolation capability of the first control side isolation device is higher than that of the second control side isolation device.

In an embodiment, the transmitting the global control data from the jurisdiction area within the nuclear power plant to the jurisdiction area outside the nuclear power plant through the first control side isolation device and the second control side isolation device in sequence includes:
transmitting the global control data from the jurisdiction area within the nuclear power plant to a first superior nuclear power management device of the jurisdiction area outside the nuclear power plant through the first control side isolation device and the second control side isolation device in sequence, to allow the first superior nuclear power management device to transmit, through the first control side isolation device, the global control data to a second superior nuclear power management device of the jurisdiction area outside the nuclear power plant.

In an embodiment, each nuclear power industrial control system cluster includes at least two nuclear power industrial control systems and at least two data summarization devices, and each nuclear power industrial control system is configured to transmit locally generated operating data to a data summarization device through a system data isolation device; and
the acquiring the operating data of the at least two nuclear power industrial control system clusters through the system cluster port-side isolation device includes:
acquiring operating data of each nuclear power industrial control system cluster from the data summarization device of each nuclear power industrial control system cluster through the system cluster port-side isolation device.

In an embodiment, the nuclear power management server cluster includes at least one of a data storage server, a data analysis server, a data interface server, a terminal security server, a virus and patch server, an emergency platform server, an account management server, and a threat intelligence server.

In the second aspect of the present application, a global data control apparatus for a cybersecurity of nuclear power plant industrial control systems is provided, including:
a management data acquisition module, configured to acquire nuclear power management data of a nuclear power management server cluster, the nuclear power management data comprising cybersecurity data of the nuclear power plant industrial control systems;
an operating data acquisition module, configured to acquire operating data of at least two nuclear power industrial control system clusters through a system cluster port-side isolation device, a cluster spatial isolation device being configured between adjacent nuclear power plant system clusters;
a global data determination module, configured to process the operating data and the nuclear power management data to obtain global control data of the nuclear power plant; and
a data transmission module, configured to transmit the global control data from a jurisdiction area within the nuclear power plant to a jurisdiction area outside the nuclear power plant through a control side isolation device.

In the third aspect of the present application, a central control device is provided, including a processor and a memory storing a computer program, the processor, when executing the computer program, implements the steps of.
acquiring nuclear power management data of a nuclear power management server cluster, the nuclear power management data comprising cybersecurity data of the nuclear power plant industrial control system;
acquiring operating data of at least two nuclear power industrial control system clusters through a system cluster port-side isolation device, a cluster spatial isolation device being configured between adjacent nuclear power plant system clusters;
processing the operating data and the nuclear power management data to obtain global control data of the nuclear power plant; and
transmitting the global control data from a jurisdiction area within the nuclear power plant to a jurisdiction area outside the nuclear power plant through a control side isolation device.

In the fourth aspect of the present application, a computer-readable storage medium is provided, on which a computer program is stored, the computer program, when executed by a processor, causes the processor to implement the steps of:
acquiring nuclear power management data of a nuclear power management server cluster, the nuclear power management data comprising cybersecurity data of the nuclear power plant industrial control system;
acquiring operating data of at least two nuclear power industrial control system clusters through a system cluster port-side isolation device, a cluster spatial isolation device being configured between adjacent nuclear power plant system clusters;
processing the operating data and the nuclear power management data to obtain global control data of the nuclear power plant; and
transmitting the global control data from a jurisdiction area within the nuclear power plant to a jurisdiction area outside the nuclear power plant through a control side isolation device.

In the fifth aspect of the present application, a global data control system for a cybersecurity of a nuclear power plant industrial control system is provided, including: a central control device, a nuclear power management server cluster, at least two nuclear power industrial control system clusters, a cluster spatial isolation device located between adjacent nuclear power plant system clusters, a system cluster port-side isolation device of each nuclear power plant system cluster, and a control side isolation device;
the nuclear power management server cluster is configured to store nuclear power management data, the nuclear power management data including cybersecurity data of the nuclear power plant industrial control system;
each nuclear power industrial control system cluster is configured to store operating data of each nuclear power industrial control system cluster; and
the central control device is configured to perform the steps of the global data control method for the cybersecurity of the nuclear power plant industrial control system in any of the above-mentioned embodiments.

In an embodiment, the system cluster port-side isolation device corresponding to each nuclear power industrial control system cluster is determined according to a security level of each nuclear power industrial control system cluster, and the security level is directly proportional to a data unidirectional transmission isolation capability of the system cluster port-side isolation device.

In an embodiment, the cluster spatial isolation device configured between adjacent nuclear power plant system clusters is determined according to a similarity of security levels of the adjacent nuclear power plant system clusters, and the similarity of the security levels is inversely proportional to a data unidirectional transmission isolation capability of the cluster spatial isolation device.

In an embodiment, control side isolation devices comprise a first control side isolation device located between a production area and an office area in a jurisdiction area within the nuclear power plant, and a second control side isolation device located between a jurisdiction area within the nuclear power plant and a jurisdiction area outside the nuclear power plant, wherein a data unidirectional transmission isolation capability of the first control side isolation device is higher than that of the second control side isolation device.

### BRIEF DESCRIPTION OF THE DRAWINGS

To describe the technical solution in the embodiments of the present invention or the existing technology more clearly, the accompanying drawings required for describing the embodiments or the existing technology will be briefly introduced below. Obviously, the accompanying drawings in the following description show merely some embodiments of the present invention, and a person of ordinary skill in the art may still derive other drawings from these accompanying drawings without any creative efforts.
FIG. 1 is an application environment diagram of a global data control method for a cybersecurity of a nuclear power plant industrial control system according to an embodiment.
FIG. 2 is a schematic flow chart of a global data control method for cybersecurity of a nuclear power plant industrial control system according to an embodiment.
FIG. 3 is a schematic diagram of a nuclear power management server cluster according to an embodiment.
FIG. 4 is a schematic diagram illustrating a partition of different nuclear power industrial control system clusters according to an embodiment.
FIG. 5 is a schematic diagram illustrating a principle of acquiring operating data of a nuclear power industrial control system cluster and management data of a nuclear power management server cluster according to an embodiment.
FIG. 6 is a schematic diagram illustrating a principle of acquiring operating data of a nuclear power industrial control system cluster according to an embodiment.
FIG. 7 is a schematic diagram illustrating a principle of data transmission from a nuclear power plant to a superior unit according to an embodiment.
FIG. 8 is a flow chart showing a global data control method for a cybersecurity of a nuclear power plant industrial control system according to another embodiment.
FIG. 9 is a schematic structure diagram of a whole nuclear power plant according to an embodiment.
FIG. 10 is a structural block diagram of a global data control apparatus for a cybersecurity of a nuclear power plant industrial control system according to an embodiment.
FIG. 11 is a diagram showing an internal structure of a central control device according to an embodiment.

### DETAILED DESCRIPTION

In order to make the purpose, technical solution and advantages of the present application clearer, the present invention will be further elaborated below with reference to the accompanying drawings and embodiments. It should be appreciated that the specific embodiments described here are merely used for explaining the present invention, not to limit the present invention.

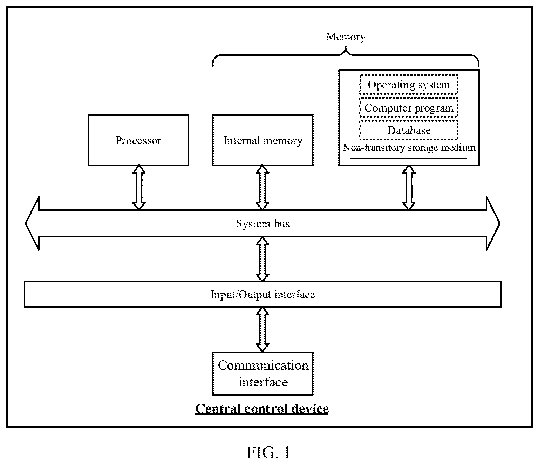

A global data control method for a cybersecurity of a nuclear power plant industrial control system provided in the embodiment of the present invention can be applied to an application environment shown in FIG. 1. In an embodiment, a central control device is provided, which may be a server, and an internal structure diagram of the central control device may be as shown in FIG. 1. The central control device may include a processor, a memory, and a network interface that are connected through a system bus. The processor of the central control device is configured to provide computing and control capabilities. The memory of the central control device includes a non-transitory storage medium and an internal memory. The non-transitory storage medium stores an operating system, a computer program, and a database. The internal memory provides an environment for running the operating system and the computer program in the non-transitory storage medium. The database of the central control device is configured to store data required for performing the global data control process for the cybersecurity of the nuclear power plant industrial control system. The network interface of the central control device is configured to communicate with an external terminal through a network connection. The computer program is executed by the processor to implement the global data control method for the cybersecurity of the nuclear power plant industrial control system shown in any one of the following embodiments.

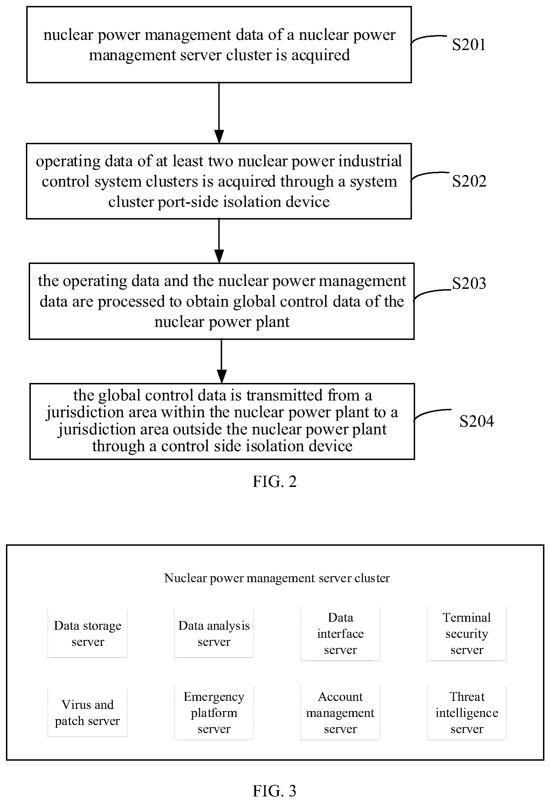

In an embodiment, as shown in FIG. 2, a global data control method for a cybersecurity of a nuclear power plant industrial control system is provided. The method is applied to a central control device in FIG. 1 as an example for description, and the method includes the following steps.

S201: nuclear power management data of a nuclear power management server cluster is acquired.

Optionally, the nuclear power management data includes cybersecurity data of a nuclear power plant industrial control system.

As shown in FIG. 3, the nuclear power management server cluster includes a plurality of nuclear power management servers. Each nuclear power management server may provide or store cybersecurity data of the nuclear power plant industrial control system. The nuclear power management server may include a data storage server, a data analysis server, a data interface server, a terminal security server, an antivirus and patch server, an emergency platform server, an account management server, and a threat intelligence server.

The data storage server is configured to store data for the entire nuclear power plant, including data , data processing process, and data processing results for each server, which includes all data such as an attack, an attack process, a prevention and control method, and a personnel operation record, etc. The data analysis server is configured to perform data deduplication, data cleaning, data classification, data filling, data label, and normalization, etc., on all related data that are centrally managed and controlled by the nuclear power plant through data analysis methods such as data statistics, data association, data modeling and artificial intelligence, , and classify and store the data. The data interface server is mainly configured to be connected to an external and superior unit. A global data control system for the cybersecurity of the nuclear power plant industrial control system is configured to periodically generate a production safety analysis report and an operation analysis report of the nuclear power plant according to the cybersecurity supervision and management requirements of the relevant departments of the country and actual operation conditions of each nuclear power plant industrial control system, and transmit the generated reports to the superior unit periodically. The generated reports include, but are not limited to, security events, alarm information classifications, key cybersecurity events, and operation events of industrial control systems. The terminal security server is configured to instruct a security operation and maintenance personnel to correct the system according to the events throughout the nuclear power plant. The antivirus and patch server is configured to repair a virus with a patch after the virus is discovered, and record, prevent and control the virus. The emergency platform server is configured to formulate an emergency plan and transmit the emergency plan to the central control device of the global data control system of the nuclear power plant industrial control system. The central control device invokes a preset event push rule according to a security event level, and pushes the security event level to a cybersecurity emergency response and management platform for the entire nuclear power plant in real time, so that the cybersecurity emergency response and management platform for the entire nuclear power plant performs the emergency plan based on the security event level. The account management terminal is configured to perform a management on an account of a user, including a security management, and a management of an authority level of each user. The threat intelligence server is configured to predict and display security threats to the entire nuclear power plant.

Optionally, data from various servers is obtained from the above-mentioned servers. Specifically, each nuclear power management server in the cluster and the central control device are connected to a core network of an industrial control system security management center of the entire nuclear power plant, and cybersecurity data of the nuclear power plant industrial control system of the nuclear power management server cluster can be acquired through the core network.

S202: operating data of at least two nuclear power industrial control system clusters is acquired through a system cluster port-side isolation device.

The nuclear power industrial control system cluster may be a cluster consisting of nuclear power industrial control systems with similar security levels, and may include a plurality of nuclear power industrial control systems.

There exist at least two nuclear power industrial control system clusters in the embodiment, and a cluster spatial isolation device is configured between adjacent nuclear power industrial control system clusters. The cluster spatial isolation device is configured to separate adjacent nuclear power industrial control system clusters, to prevent data flow between adjacent nuclear power industrial control system clusters. In such a manner, even if one nuclear power industrial control system cluster is under attack by a network, the adjacent nuclear power industrial control system cluster is not affected by the attack.

Optionally, in the embodiment, the cluster spatial isolation device configured between adjacent nuclear power plant system clusters may be determined according to a similarity of security levels of adjacent nuclear power plant system clusters. In addition, the similarity of the security levels is inversely proportional to a data unidirectional transmission isolation capability of the cluster spatial isolation device. For example, a security level corresponding to each nuclear power industrial control system cluster may be determined according to an importance of each nuclear power industrial control system cluster in the whole nuclear power plant. If security levels of two adjacent nuclear power industrial control system clusters are the same or similar, a cluster spatial isolation device with a lower unidirectional transmission capability, such as a logical isolation device, is provided for the two adjacent nuclear power industrial control system clusters, in order to save costs. If security levels of two adjacent nuclear power industrial control system clusters are quite different, a cluster spatial isolation device with a high unidirectional transmission capability, such as a power unidirectional forward isolation device, is provided for the two adjacent nuclear power industrial control system clusters, in order to maximize the security.

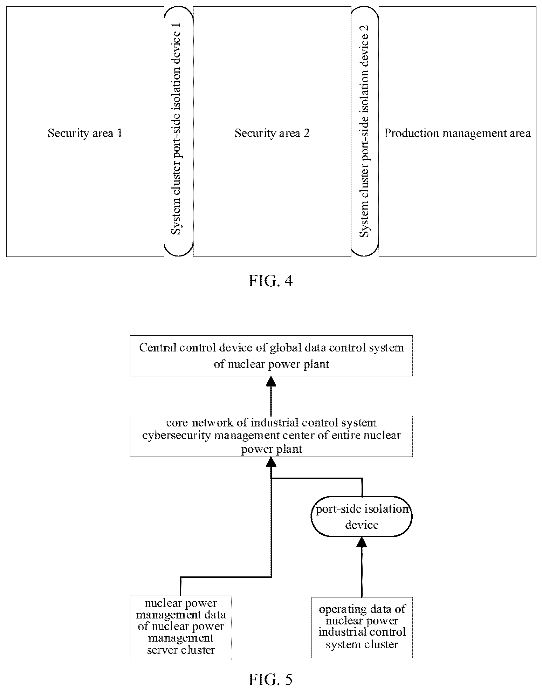

Optionally, as shown in FIG. 4, when two nuclear power industrial control system clusters have similar security levels, for example, security area 1 and security area 2, the system cluster port-side isolation device with the low data unidirectional transmission isolation capability can be utilized to reduce the costs. When two nuclear power industrial control system clusters have quite different security levels, for example, the security area 2 and a production management area, the system cluster port-side isolation device with the high data unidirectional transmission isolation capability can be utilized to ensure maximum security.

The system cluster port-side isolation device may be a device configured to isolate a data transmission direction between the nuclear power industrial control system cluster and a central control device, that is, the operating data of the nuclear power industrial control system cluster can be transmitted to the central control device, while data in the central control device cannot be reversely transmitted to the nuclear power industrial control system cluster. Optionally, all nuclear power industrial control system clusters may correspond to the same system cluster port-side isolation device. Alternatively, each nuclear power industrial control system cluster may correspond to one system cluster port-side isolation device.

Optionally, since the higher unidirectional transmission capability of the isolation device has a higher cost, in the embodiment, in order to save the costs, a dedicated system cluster port-side isolation device is preferably configured for each nuclear power industrial control system cluster. The system cluster port-side isolation device corresponding to each nuclear power industrial control system cluster is determined according to a security level of each nuclear power industrial control system cluster, and the security level is directly proportional to the data unidirectional transmission isolation capability of the system cluster port-side isolation device.

Optionally, in the embodiment, if the nuclear power industrial control system clusters correspond to a common system cluster port-side isolation device, in this case, the nuclear power industrial control system clusters can be interacted with through the common system cluster port-side isolation device to obtain the operating data of each nuclear power industry control system cluster. If each of the nuclear power industrial control system clusters corresponds to an individual system cluster port-side isolation device respectively, in this case, each nuclear power industrial control system cluster can be interacted with through the individual system cluster port-side isolation devices to acquire the operating data of each nuclear power industrial control system cluster.

S203: the operating data and the nuclear power management data are processed to obtain global control data of the nuclear power plant.

Optionally, as shown in FIG. 5, the acquired nuclear power management data of the nuclear power management server cluster and the acquired operating data of the nuclear power industrial control system clusters are transmitted, through the core network of the industrial control system security management center of the entire nuclear power plant, to the central control device of the global data control system for the cybersecurity of the nuclear power plant industrial control system for aggregation, in order to obtain the global control data of the nuclear power plant.

Optionally, the central control device may further perform related processing on the received operating data and the nuclear power management data for, such as attitude display, monitoring and warning, security operation and maintenance, information sharing, asset management and security analysis, emergency response, external interface, system management, system security management, audit management, security requirements of the central control device, data processing, and data analysis, etc., and the processing results also serve as the global control data.

S204: the global control data is transmitted from a jurisdiction area within the nuclear power plant to a jurisdiction area outside the nuclear power plant through a control side isolation device.

The control side isolation device is configured to separate a jurisdiction area within the nuclear power plant from a jurisdiction area outside the nuclear power plant. Since security of the jurisdiction area outside the nuclear power plant is lower, the jurisdiction area outside the nuclear power plant is more vulnerable to a security attack compared to the jurisdiction area within the nuclear power plant. The control side isolation device can protect the jurisdiction area within the nuclear power plant from a threat of an attack when the jurisdiction area outside the nuclear power plant is under the attack, thereby greatly guaranteeing the security of the jurisdiction area within the nuclear power plant.

The jurisdiction area within the nuclear power plant refers to all areas within the nuclear power plant, including a nuclear power management server cluster, a nuclear power industrial control system cluster, and a central control device of a global data control system for a cybersecurity of the nuclear power plant industrial control system. The jurisdiction area outside the nuclear power plant refers to other areas other than the jurisdiction area within the nuclear power plant. For example, the jurisdiction area outside the nuclear power plant may include an area in which a first superior nuclear power management device and a second superior nuclear power management device are located.

Optionally, the global control data may be transmitted from the jurisdiction area within the nuclear power plant to the jurisdiction area outside the nuclear power plant based on an optical signal transmission mode through the control side isolation device. For example, the global control data is transmitted to the first superior nuclear power management device and the second superior nuclear power management device of the jurisdiction area outside the nuclear power plant.

In the above-mentioned embodiment, the nuclear power management data is acquired from each server, and the operating data is acquired from at least two nuclear power industrial control system clusters, and the acquired data is centrally managed and processed to obtain the global control data of the nuclear power plant, thereby controlling over the data from the entire nuclear power plant. In addition, when the operating data of each nuclear power industrial control system cluster is acquired, the system cluster port-side isolation device is provided, thereby implementing the unidirectional transmission of the operating data, avoiding confusion of the operating data of the nuclear power industrial control system clusters Also, the cluster spatial isolation device is configured between adjacent nuclear power plant system clusters, thereby ensuring independence of different nuclear power plant system clusters. Accordingly, even if an area is under a security threat, the security threat is not brought to an adjacent area, and maximum security of the nuclear power plant is guaranteed.

Optionally, each nuclear power industrial control system cluster in the embodiment may include at least two nuclear power industrial control systems and at least two data summarization devices, and each nuclear power industrial control system transmits locally generated operating data to a data summarization device through a system data isolation device. Correspondingly, the step of acquiring the operating data of the at least two nuclear power industrial control system clusters through the system cluster port-side isolation device may include that the operating data of each nuclear power industrial control system cluster is acquired from the data summarization device of each nuclear power industrial control system cluster through the system cluster port-side isolation device.

The data summarization device may be a device that summarizes operating data of each nuclear power industrial control system in a nuclear power industrial control system cluster in which the data summarization device is located.

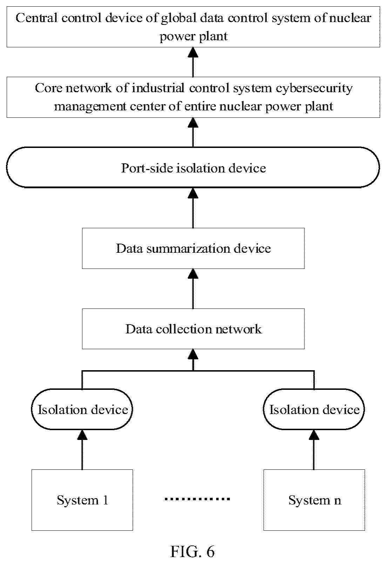

Optionally, the nuclear power plant includes a plurality of nuclear power industrial control systems. The plurality of nuclear power industrial control systems are classified according to corresponding safety levels, and systems with similar security levels or the same security level are arranged in the same area. Nuclear power industrial control systems in each area serve as a nuclear power industrial control system cluster. For example, an area corresponding to nuclear power industrial control systems with a higher security level may serve as a security area 1, an area corresponding to nuclear power industrial control systems with a medium security level may serve as a security area 2, and an area corresponding to nuclear power industrial control systems with a lower security level may serve as a production management area. As shown in FIG. 6, in each area, each nuclear power industrial control system respectively collects its own operating data, including full original network traffics, host logs, security device logs (own logs and audit records), logs of network devices, security policies, system operating logs, security event data, industrial control system asset information, etc. Each nuclear power industrial control system respectively transmits data collected by itself to the data summarization device through an isolation device and via the data collection network. The data summarization device performs preprocessing on the received data. The preprocessing may include data format conversion, for example, codes are converted into visual data, and unnecessary data is removed. The processed data is transmitted to the central control device of the global data control system for the cybersecurity of the nuclear power plant industrial control system through the system cluster port-side isolation device and the core network of the industrial control system security management center of the entire nuclear power plant.

Optionally, each nuclear power industrial control system transmits respective operating data to the data summarization device through the isolation device. The isolation device herein can prevent data backflow, and prevent data of different systems from being confused. The pre-processed data is transmitted to the central control device of the global data control system for the cybersecurity of the nuclear power plant industrial control system through the system cluster port-side isolation device and the core network of the industrial control system security management center of the entire nuclear power plant. The system cluster port-side isolation device herein may separate each nuclear power industrial control system cluster from the core network of the industrial control system security management center of the entire nuclear power plant. Since the security level of the core network of the industrial control system security management center of the entire nuclear power plant is lower, the core network is vulnerable to attack. After being separated, even if the core network of the industrial control system security management center of the entire nuclear power plant is under attack, the attack does not affect the nuclear power industrial control system cluster.

In order to describe in more detail the global data control method for the cybersecurity of the nuclear power plant industrial control system, based on the above-mentioned embodiments, how to transmit the global control data from the jurisdiction area within the nuclear power plant to the jurisdiction area outside the nuclear power plant is described in the embodiment, and the method specifically includes following steps.

The global control data is transmitted from the jurisdiction area within the nuclear power plant to the jurisdiction area outside the nuclear power plant through the first control side isolation device and the second control side isolation device sequentially. The first control side isolation device is located between a production area and an office area in the jurisdiction area within the nuclear power plant, the second control side isolation device is located between the office area in the jurisdiction area within the nuclear power plant and the jurisdiction area outside the nuclear power plant, and the data unidirectional transmission isolation capability of the first control side isolation device is higher than that of the second control side isolation device.

Specifically, the central control device of the global data control system for the cybersecurity of the nuclear power plant industrial control system transmits, through the first control side isolation device, the global control data of the nuclear power plant from the production area in the jurisdiction area within the nuclear power plant to the data management device of the office area of the nuclear power plant, and then the data management device of the office area transmits, through the second control side isolation device, the global control data of the nuclear power plant from the office area of the nuclear power plant to the jurisdiction area outside the nuclear power plant, specifically to a superior nuclear power management device of the jurisdiction area outside the nuclear power plant.

Optionally, based on the above-mentioned embodiment mode, in the embodiment, the global control data can be transmitted from the jurisdiction area within the nuclear power plant to the first superior nuclear power management device of the jurisdiction area outside the nuclear power plant through the first control side isolation device and the second control side isolation device in sequence, so that the first superior nuclear power management device transmits, through the first control side isolation device, the global control data to the second superior nuclear power management device of the jurisdiction area outside the nuclear power plant.

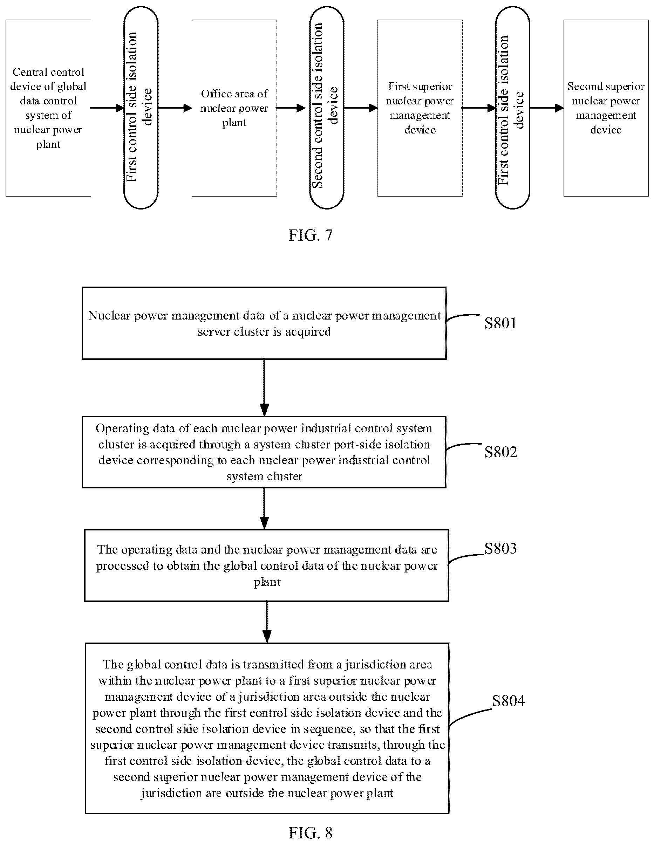

Optionally, as shown in FIG. 7, the central control device of the global data control system for the cybersecurity of the nuclear power plant industrial control system transmits, through the first control side isolation device, the global control data of the nuclear power plant from the production area in the jurisdiction area within the nuclear power plant to the data management device of the office area of the nuclear power plant, and then the data management device of the office area transmits, through the second control side isolation device, the global control data of the nuclear power plant from the office area of the nuclear power plant to the first superior nuclear power management device of the jurisdiction area outside the nuclear power plant, and subsequently the first superior nuclear power management device transmits the data to the second superior nuclear power management device through the first control side isolation device.

It should be noted that the central control device of the global data control system for the cybersecurity of the nuclear power plant industrial control system is located in the production area in the jurisdiction area within the nuclear power plant, the security level of the central control device of the global data control system is higher, and the security level of the office area in the jurisdiction area within the nuclear power plant is lower. Therefore, a first control side isolation device with higher data unidirectional transmission isolation capability, such as a physical-block single-transduction isolation device, is provided between the production area and the office area in the jurisdiction area within the nuclear power plant. In such a manner, even if the cybersecurity of the office area is threatened, the threat does not affect the production area of the nuclear power plant. The security of the office area is similar to that of the first superior nuclear power management device, and accordingly the second control side isolation device with lower data unidirectional transmission isolation capability, such as a logic isolation device, is utilized, which not only ensures the security to a certain extent, but also reduces the costs of the isolation device. The security of the second superior nuclear power management device is far less than security of the first superior nuclear power management device, and accordingly the first control side isolation device with higher data unidirectional transmission isolation capability, such as a physical-block single-transduction isolation device, is provided between the first superior nuclear power management device and the second superior nuclear power management device. In such a manner, even if the cybersecurity of the second superior nuclear power management device is threatened, the threat does not affect the first superior nuclear power management device.

In the above-mentioned embodiment, when the global control data is transmitted from the jurisdiction area within the nuclear power plant to the jurisdiction area outside the nuclear power plant, two kinds of control side isolation devices are provided, that is, the first control side isolation device between the production area and the office area and the second control side isolation device between the jurisdiction area outside the nuclear power plant jurisdiction area and the office area, which further ensures that the jurisdiction area within the nuclear power plant is not affected by an attack when the jurisdiction area outside the nuclear power plant with lower security is under the network attack, thereby ensuring maximum safety of the nuclear power plant.

In order to describe the solution more comprehensively, in an embodiment, an optional mode of the global data control method for the cybersecurity of the nuclear power plant industrial control system is provided, as shown in FIG. 8 to FIG. 9.

S801: nuclear power management data of a nuclear power management server cluster is acquired.

The nuclear power management data may include cybersecurity data of the nuclear power plant industrial control system.

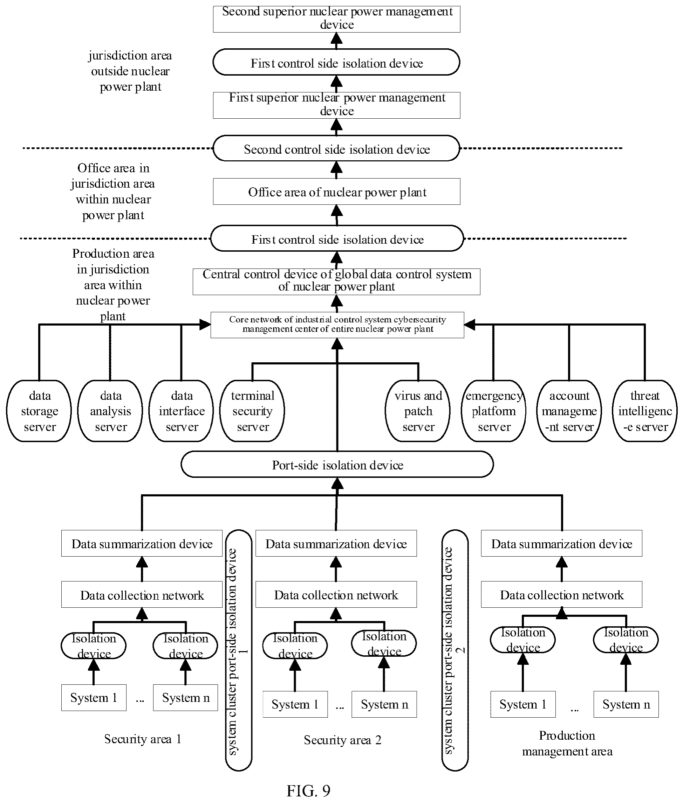

For example, as shown in FIG. 9, the central control device of the global data control system for the cybersecurity of the nuclear power plant industrial control system acquires the nuclear power management data of the nuclear power management server cluster from the nuclear power management server cluster including servers such as a data storage server, a data analysis server, a data interface server, a terminal security server, a virus and patch server, an emergency platform server, an account management server, and a threat intelligence server. The nuclear power management data of the nuclear power management server cluster is transmitted to the central control device of the global data control system for the cybersecurity of the nuclear power plant industrial control system through the core network of the industrial control system security management center of the entire nuclear power plant.

S802: operating data of each nuclear power industrial control system cluster is acquired through a system cluster port-side isolation device corresponding to each nuclear power industrial control system cluster.

For example, as shown in FIG. 9, each nuclear power industrial control system collects its own operating data, and transmits, through an isolation device, the data to the data summarization device to pre-process the data, and then the data summarization device transmits the pre-processed operating data to the central control device of the global data control system for the cybersecurity of the nuclear power plant industrial control system through the core network of the industrial control system security management center of the entire nuclear power plant and the port-side isolation device.

S803: the operating data and the nuclear power management data are processed to obtain the global control data of the nuclear power plant.

For example, as shown in FIG. 9, the central control device of the global data control system for the cybersecurity of the nuclear power plant industrial control system acquires the nuclear power management data of the nuclear power management server cluster and the operating data of the nuclear power industrial control system cluster through the core network of the industrial control system security management center of the entire nuclear power plant, and performs summarization and processing to finally obtain the global control data of the nuclear power plant.

S804: the global control data is transmitted from a jurisdiction area within the nuclear power plant to a first superior nuclear power management device of a jurisdiction area outside the nuclear power plant through the first control side isolation device and the second control side isolation device in sequence, so that the first superior nuclear power management device transmits, through the first control side isolation device, the global control data to a second superior nuclear power management device of the jurisdiction are outside the nuclear power plant.

For example, as shown in FIG. 9, the central control device of the global data control system for the cybersecurity of the nuclear power plant industrial control system transmits the global control data to the data management device of the office area of the nuclear power plant through the first control side isolation device. The data management device of the office area of the nuclear power plant transmits the global control data to the first superior nuclear power management device of the jurisdiction area outside the nuclear power plant through the second control side isolation device. The first superior nuclear power management device transmits the global control data to the second superior nuclear power management device through the first control side isolation device.

As for the specific process of the steps S801 to S804, reference can be made to the description in the aforementioned method embodiments. The implementation principle and technical effects are similar, and are not repeated herein.

It should be appreciated that, although steps in the flow charts involved in the above-mentioned embodiments are sequentially displayed according to instructions of arrows, these steps are not definitely performed in an order indicated by the arrows. Unless expressly stated in the specification, these steps are not performed in a strict order, but may be performed in other orders. In addition, at least a part of steps in the flow charts involved in the above-mentioned embodiments may include multiple steps or multiple phases. These steps or phases are not definitely performed at the same moment, but may be performed at different moments. These steps or phases are not definitely performed in sequence, but may be performed in turns or alternately with other steps or at least a part of steps or phases in other steps.

Based on the same inventive concept, in an embodiment of the present invention, a global data control apparatus for a cybersecurity of a nuclear power plant industrial control system for implementing the above-mentioned global data control method for the cybersecurity of the nuclear power plant industrial control system is provided. The implementation solution for solving the technical problem provided by the apparatus is similar to the implementation solution described in the above-mentioned method. Accordingly, as for the specific limitations in the following provided one or more embodiments of the global data control apparatus for the cybersecurity of the nuclear power plant industrial control systems, reference can be made to the limitations on the global data control method for the cybersecurity of the nuclear power plant industrial control system in the above, details are not repeated herein.

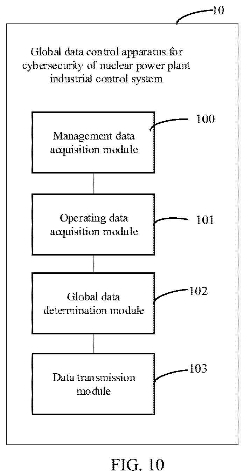

In an embodiment, as shown in FIG. 10, a global data control apparatus 10 for a Cybersecurity of a nuclear power plant industrial control system is provided, including a management data acquisition module 100, an operating data acquisition module 101, a global data determination module 102, and a data transmission module 103.

The management data acquisition module 100 is configured to acquire nuclear power management data of a nuclear power management server cluster. The nuclear power management data includes cybersecurity data of the nuclear power plant industrial control system.

The operating data acquisition module 101 is configured to acquire operating data of at least two nuclear power industrial control system clusters through a system cluster port-side isolation device. A cluster spatial isolation device is configured between adjacent nuclear power plant system clusters.

The global data determination module 102 is configured to process the operating data and the nuclear power management data to obtain the global control data of the nuclear power plant.

The data transmission module 103 is configured to transmit the global control data from a jurisdiction area within the nuclear power plant to a jurisdiction area outside the nuclear power plant through a control side isolation device.

In another embodiment, the above-mentioned data acquisition module 101 is specifically configured to acquire operating data of each nuclear power industrial control system cluster through a system cluster port-side isolation device corresponding to each nuclear power industrial control system cluster.

The system cluster port-side isolation device corresponding to each nuclear power industrial control system cluster is determined according to a security level of each nuclear power industrial control system cluster, and the security level is directly proportional to a data unidirectional transmission isolation capability of the system cluster port-side isolation device.

In another embodiment, the cluster spatial isolation device configured between adjacent nuclear power plant system clusters is determined according to a similarity of security levels of the adjacent nuclear power plant system clusters, and the similarity of the security levels is inversely proportional to a data unidirectional transmission isolation capability of the cluster spatial isolation device.

In another embodiment, the data transmission module 103 in FIG. 10 is specifically configured to transmit the global control data from the jurisdiction area within the nuclear power plant to the jurisdiction area outside the nuclear power plant through a first control side isolation device and a second control side isolation device in sequence. The first control side isolation device is located between a production area and an office area in the jurisdiction area within the nuclear power plant, the second control side isolation device is located between the office area in the jurisdiction area within the nuclear power plant and the jurisdiction area outside the nuclear power plant, and the data unidirectional transmission isolation capability of the first control side isolation device is higher than that of the second control side isolation device.

In another embodiment, the data transmission module 103 in FIG. 10 is further specifically configured to transmit the global control data from the jurisdiction area within the nuclear power plant to a first superior nuclear power management device of the jurisdiction area outside the nuclear power plant through the first control side isolation device and the second control side isolation device in sequence, so that the first superior nuclear power management device transmits, through the first control side isolation device, the global control data to a second superior nuclear power management device of the jurisdiction area outside the nuclear power plant.

In another embodiment, each nuclear power industrial control system cluster may include at least two nuclear power industrial control systems and at least two data summarization devices, and each nuclear power industrial control system transmits locally generated operating data to a data summarization device through a system data isolation device. Correspondingly, the step of acquiring the operating data of the at least two nuclear power industrial control system clusters through the system cluster port-side isolation device may include: operating data of each nuclear power industrial control system cluster is acquired from the data summarization device of each nuclear power industrial control system cluster through the system cluster port-side isolation device.

In another embodiment, the nuclear power management server cluster may include at least one of a data storage server, a data analysis server, a data interface server, a terminal security server, a virus and patch server, an emergency platform server, an account management server, and a threat intelligence server.

All modules in the above-mentioned global data control apparatus for the cybersecurity of the nuclear power plant industrial control system may be implemented in whole or in part by using software, hardware, and a combination thereof. The above-mentioned modules may be embedded in or independent of a processor in the central control device in a hardware form, or may be stored in a memory in the central control device in a software form, so that the processor can invoke and execute operations corresponding to the modules.

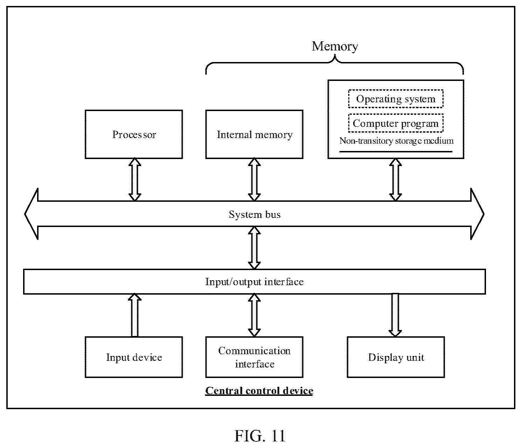

In an embodiment, a central control device is provided. The central control device may be a terminal, and an internal structure diagram of the central control device may be as shown in FIG. 11. The central control device includes a processor, a memory, an input/output interface, a communications interface, a display unit, and an input device. The processor, the memory, and the input/output interface are connected to each through a system bus. The communication interface, the display unit, and the input device are connected to the system bus through the input/output interface. The processor of the central control device is configured to provide computing and controlling capabilities. The memory of the central control device includes a non-transitory storage medium and an internal memory. The non-transitory storage medium stores an operating system and a computer program. The internal memory provides an environment for running the operating system and the computer program in the non-transitory storage medium. The input/output interface of the central control device is configured to exchange information between the processor and an external device. The communication interface of the central control device is configured to communicate with an external terminal in a wired or wireless mode. The wireless mode may be implemented by using a WIFI, a mobile cellular network, a near field communication (NFC), or other technologies. The computer program is executed by a processor to implement a global data control method for a cybersecurity of a nuclear power plant industrial control system. The display unit of the central control device is configured to form a visual picture, which may be a display screen, a projection device, or a virtual reality imaging device. The display screen may be a liquid crystal display screen or an electronic ink display screen. The input device of the central control device may be a touch layer covering the display screen, or may be a key, a trackball, or a touchpad provided on a housing of the central control device, or may be an external keyboard, a touchpad, or a mouse, etc.

A person skilled in the art may understand that the structure shown in FIG. 11 is merely a block diagram of partial structure related to the solution of the present application, and does not constitute a limitation on the central control device to which the solution of the present application is applied. A specific central control device may include more or fewer components than those shown in the figures, or combine some components, or have different component arrangements.

In an embodiment, a central control device is provided, including a processor and a memory storing a computer program, and the processor, when executing the computer program, implements the following steps:
acquiring nuclear power management data of a nuclear power management server cluster, in which the nuclear power management data includes cybersecurity data of the nuclear power plant industrial control system;
acquiring operating data of at least two nuclear power industrial control system clusters through a system cluster port-side isolation device, in which a cluster spatial isolation device is configured between adjacent nuclear power plant system clusters;
processing the operating data and the nuclear power management data to obtain the global control data of the nuclear power plant; and
transmitting the global control data from a jurisdiction area within the nuclear power plant to a jurisdiction area outside the nuclear power plant through a control side isolation device.

In an embodiment, the step of acquiring the operating data of at least two nuclear power industrial control system clusters through the system cluster port-side isolation device may include:
acquiring operating data of each nuclear power industrial control system cluster through a system cluster port-side isolation device corresponding to each nuclear power industrial control system cluster;
the system cluster port-side isolation device corresponding to each nuclear power industrial control system cluster is determined according to a security level of each nuclear power industrial control system cluster, and the security level is directly proportional to a data unidirectional transmission isolation capability of the system cluster port-side isolation device.

In an embodiment, the cluster spatial isolation device configured between adjacent nuclear power plant system clusters is determined according to a similarity of security levels of the adjacent nuclear power plant system clusters, and the similarity of the security levels is inversely proportional to a data unidirectional transmission isolation capability of the cluster spatial isolation device.

In an embodiment, the step of transmitting the global control data from the jurisdiction area within the nuclear power plant to the jurisdiction area outside the nuclear power plant through the control side isolation device may include:
transmitting the global control data from the jurisdiction area within the nuclear power plant to the jurisdiction area outside the nuclear power plant through a first control side isolation device and a second control side isolation device in sequence, in which the first control side isolation device is located between a production area and an office area in the jurisdiction area within the nuclear power plant, the second control side isolation device is located between the office area in the jurisdiction area within the nuclear power plant and the jurisdiction area outside the nuclear power plant, and the data unidirectional transmission isolation capability of the first control side isolation device is higher than that of the second control side isolation device.

In an embodiment, the step of transmitting the global control data from the jurisdiction area within the nuclear power plant to the jurisdiction area outside the nuclear power plant through the first control side isolation device and the second control side isolation device in sequence may include:
transmitting the global control data from the jurisdiction area within the nuclear power plant to a first superior nuclear power management device of the jurisdiction area outside the nuclear power plant through the first control side isolation device and the second control side isolation device in sequence, so that the first superior nuclear power management device transmits, through the first control side isolation device, the global control data to a second superior nuclear power management device of the jurisdiction area outside the nuclear power plant.

In an embodiment, each nuclear power industrial control system cluster may include at least two nuclear power industrial control systems and at least two data summarization devices, and each nuclear power industrial control system transmits locally generated operating data to a data summarization device through a system data isolation device. Correspondingly, the processor, when executing the computer program, may further implement the following steps:
acquiring operating data of each nuclear power industrial control system cluster from the data summarization device of each nuclear power industrial control system cluster through the system cluster port-side isolation device.

In an embodiment, the nuclear power management server cluster may include at least one of a data storage server, a data analysis server, a data interface server, a terminal security server, a virus and patch server, an emergency platform server, an account management server, and a threat intelligence server.

In an embodiment, a computer-readable storage medium is provided, on which a computer program is stored, the computer program, when being executed by a processor, causes the processor to implement the following steps of:
acquiring nuclear power management data of a nuclear power management server cluster, in which the nuclear power management data includes cybersecurity data of the nuclear power plant industrial control system;
acquiring operating data of at least two nuclear power industrial control system clusters through a system cluster port-side isolation device, in which a cluster spatial isolation device is configured between adjacent nuclear power plant system clusters;
processing the operating data and the nuclear power management data to obtain the global control data of the nuclear power plant; and
transmitting the global control data from a jurisdiction area within the nuclear power plant to a jurisdiction area outside the nuclear power plant through a control side isolation device.

In an embodiment, the step of acquiring the operating data of at least two nuclear power industrial control system clusters through the system cluster port-side isolation device may include:
acquiring operating data of each nuclear power industrial control system cluster through a system cluster port-side isolation device corresponding to each nuclear power industrial control system cluster;
the system cluster port-side isolation device corresponding to each nuclear power industrial control system cluster is determined according to a security level of each nuclear power industrial control system cluster, and the security level is directly proportional to a data unidirectional transmission isolation capability of the system cluster port-side isolation device.

In an embodiment, the cluster spatial isolation device configured between adjacent nuclear power plant system clusters is determined according to a similarity of security levels of the adjacent nuclear power plant system clusters, and the similarity of the security levels is inversely proportional to a data unidirectional transmission isolation capability of the cluster spatial isolation device.

In an embodiment, the step of transmitting the global control data from the jurisdiction area within the nuclear power plant to the jurisdiction area outside the nuclear power plant through the control side isolation device may include:
transmitting the global control data from the jurisdiction area within the nuclear power plant to the jurisdiction area outside the nuclear power plant through a first control side isolation device and a second control side isolation device in sequence, in which the first control side isolation device is located between a production area and an office area in the jurisdiction area within the nuclear power plant, the second control side isolation device is located between the office area in the jurisdiction area within the nuclear power plant and the jurisdiction area outside the nuclear power plant, and the data unidirectional transmission isolation capability of the first control side isolation device is higher than that of the second control side isolation device.

In an embodiment, the step of transmitting the global control data from the jurisdiction area within the nuclear power plant to the jurisdiction area outside the nuclear power plant through the first control side isolation device and the second control side isolation device in sequence may include:
transmitting the global control data from the jurisdiction area within the nuclear power plant to a first superior nuclear power management device of the jurisdiction area outside the nuclear power plant through the first control side isolation device and the second control side isolation device in sequence, so that the first superior nuclear power management device transmits, through the first control side isolation device, the global control data to a second superior nuclear power management device of the jurisdiction area outside the nuclear power plant.

In an embodiment, each nuclear power industrial control system cluster may include at least two nuclear power industrial control systems and at least two data summarization devices, and each nuclear power industrial control system transmits locally generated operating data to a data summarization device through a system data isolation device. Correspondingly, the step of acquiring the operating data of the at least two nuclear power industrial control system clusters through the system cluster port-side isolation device may include the following steps:
acquiring operating data of each nuclear power industrial control system cluster from the data summarization device of each nuclear power industrial control system cluster through the system cluster port-side isolation device.

In an embodiment, the nuclear power management server cluster may include at least one of a data storage server, a data analysis server, a data interface server, a terminal security server, a virus and patch server, an emergency platform server, an account management server, and a threat intelligence server.

In an embodiment, a global data control system for a cybersecurity of a nuclear power plant industrial control system is provided. The system may include: a central control device, a nuclear power management server cluster, at least two nuclear power industrial control system clusters, a cluster spatial isolation device located between adjacent nuclear power plant system clusters, a system cluster port-side isolation device of each nuclear power plant system cluster, and a control side isolation device;
the nuclear power management server cluster is configured to store nuclear power management data, the nuclear power management data may include cybersecurity data of the nuclear power plant industrial control system;
each nuclear power industrial control system cluster is configured to store operating data of each nuclear power industrial control system cluster;
the central control device is configured to perform the steps of the global data control method for the cybersecurity of the nuclear power plant industrial control system in any one of the aforementioned embodiments.

In an embodiment, the system cluster port-side isolation device corresponding to each nuclear power industrial control system cluster is determined according to a security level of each nuclear power industrial control system cluster, and the security level is directly proportional to a data unidirectional transmission isolation capability of the system cluster port-side isolation device.

In an embodiment, the cluster spatial isolation device configured between adjacent nuclear power plant system clusters is determined according to a similarity of security levels of the adjacent nuclear power plant system clusters, and the similarity of the security levels is inversely proportional to a data unidirectional transmission isolation capability of the cluster spatial isolation device.

In an embodiment, control side isolation devices may include a first control side isolation device located between a production area and an office area in a jurisdiction area within the nuclear power plant, and a second control side isolation device located between the jurisdiction area within the nuclear power plant and the jurisdiction area outside the nuclear power plant, and a data unidirectional transmission isolation capability of the first control side isolation device is higher than that of the second control side isolation device.

A person of ordinary skill in the art may appreciate that all or a part of the processes in the method in the aforementioned embodiments may be implemented by a computer program instructing related hardware. The computer program may be stored in a non-transitory computer-readable storage medium. When the computer program is executed, the processes in the aforementioned method embodiments may be included. Any reference to a memory, a database, or other media used in the embodiments provided by the present application may include at least one of a non-transitory memory or a transitory memory. The non-transitory memory may include a read-only memory (ROM), a magnetic tape, a floppy disk, a flash memory, an optical memory, a high-density embedded non-transitory memory, a resistive random access memory (ReRAM), a magnetoresistive random access memory (MRAM), a ferroelectric random access memory (FRAM), a phase change memory (PCM), a graphene memory, etc. The transitory memory may include a random access memory (RAM), or an external cache, etc. As an illustration and not a limitation, the RAM may be in multiple forms, such as a static random access memory (SRAM) or a dynamic random access memory (DRAM), etc. The databases involved in the embodiments provided in the present application may include at least one of a relational database or a non-relational database. The non-relational database may include a block chain based distributed database or the like, which is not limited thereto. The processor in the embodiments provided in the present application may be a general purpose processor, a central processing unit, a graphics processor, a digital signal processor, a programmable logic device, a quantum computing-based data processing logic device, or the like, which is not limited thereto.

The technical features in the aforementioned embodiments may be combined in any manner. In order to make the description brief, all possible combinations of the technical features in the aforementioned embodiments are not described. However, as long as there is no contradiction among the combinations of the technical features, these combinations should be considered as the scope of the present application.

The aforementioned embodiments represent only some implementation modes of the present application, and description thereof is relatively specific and detailed, but may not be construed as a limitation on the scope of the present application. It should be noted that a person of ordinary skill in the art may make some modifications and improvements without departing from the concept of the present application, which all fall within the protection scope of the present application. Therefore, the protection scope of the present application shall be subject to the appended claims.

## Claims

1. A global data control method for a cybersecurity of nuclear power plant industrial control systems, **characterized by** comprising:
acquiring nuclear power management data of a nuclear power management server cluster, the nuclear power management data comprising cybersecurity data of the nuclear power plant industrial control system;
acquiring operating data of at least two nuclear power industrial control system clusters through a system cluster port-side isolation device, a cluster spatial isolation device being configured between adjacent nuclear power plant system clusters;
processing the operating data and the nuclear power management data to obtain global control data of the nuclear power plant; and
transmitting the global control data from a jurisdiction area within the nuclear power plant to a jurisdiction area outside the nuclear power plant through a control side isolation device.

2. The method according to claim **1,** wherein the acquiring the operating data of at least two nuclear power industrial control system clusters through the system cluster port-side isolation device comprises:
acquiring operating data of each nuclear power industrial control system cluster through the system cluster port-side isolation device corresponding to each nuclear power industrial control system cluster;
wherein the system cluster port-side isolation device corresponding to each nuclear power industrial control system cluster is determined according to a security level of each nuclear power industrial control system cluster, and the security level is directly proportional to a data unidirectional transmission isolation capability of the system cluster port-side isolation device.

3. The method according to claim 1, wherein
the cluster spatial isolation device configured between adjacent nuclear power plant system clusters is determined according to a similarity of security levels of the adjacent nuclear power plant system clusters, and the similarity of the security levels is inversely proportional to a data unidirectional transmission isolation capability of the cluster spatial isolation device.

4. The method according to claim 3, wherein the transmitting the global control data from the jurisdiction area within the nuclear power plant to the jurisdiction area outside the nuclear power plant through the control side isolation device comprises:
transmitting the global control data from the jurisdiction area within the nuclear power plant to the jurisdiction area outside the nuclear power plant through a first control side isolation device and a second control side isolation device in sequence, wherein the first control side isolation device is located between a production area and an office area in the jurisdiction area within the nuclear power plant, the second control side isolation device is located between the office area in the jurisdiction area within the nuclear power plant and the jurisdiction area outside the nuclear power plant, and a data unidirectional transmission isolation capability of the first control side isolation device is higher than that of the second control side isolation device.

5. The method according to claim 4, wherein the transmitting the global control data from the jurisdiction area within the nuclear power plant to the jurisdiction area outside the nuclear power plant through the first control side isolation device and the second control side isolation device in sequence comprises:
transmitting the global control data from the jurisdiction area within the nuclear power plant to a first superior nuclear power management device of the jurisdiction area outside the nuclear power plant through the first control side isolation device and the second control side isolation device in sequence, to allow the first superior nuclear power management device to transmit, through the first control side isolation device, the global control data to a second superior nuclear power management device of the jurisdiction area outside the nuclear power plant.

6. The method according to any one of claims 1 to 5, wherein each nuclear power industrial control system cluster comprises at least two nuclear power industrial control systems and at least two data summarization devices, and each nuclear power industrial control system is configured to transmit locally generated operating data to a data summarization device through a system data isolation device, and
wherein the acquiring the operating data of the at least two nuclear power industrial control system clusters through the system cluster port-side isolation device comprises:
acquiring operating data of each nuclear power industrial control system cluster from the data summarization device of each nuclear power industrial control system cluster through the system cluster port-side isolation device.

7. The method according to any one of claims 1 to 5, wherein the nuclear power management server cluster comprises at least one of a data storage server, a data analysis server, a data interface server, a terminal security server, a virus and patch server, an emergency platform server, an account management server, and a threat intelligence server.

8. A global data control apparatus for a cybersecurity of nuclear power plant industrial control systems, **characterized by** comprising:
a management data acquisition module, configured to acquire nuclear power management data of a nuclear power management server cluster, the nuclear power management data comprising cybersecurity data of the nuclear power plant industrial control system;
an operating data acquisition module, configured to acquire operating data of at least two nuclear power industrial control system clusters through a system cluster port-side isolation device, a cluster spatial isolation device being configured between adjacent nuclear power plant system clusters;
a global data determination module, configured to process the operating data and the nuclear power management data to obtain global control data of the nuclear power plant; and
a data transmission module, configured to transmit the global control data from a jurisdiction area within the nuclear power plant to a jurisdiction area outside the nuclear power plant through a control side isolation device.

9. A central control device, comprising a processor and a memory storing a computer program, wherein the processor, when executing the computer program, implements the steps of the method of any one of claims 1 to 7.

10. A computer-readable storage medium, on which a computer program is stored, wherein the computer program, when executed by a processor, causes the processor to implement the steps of the method of any one of claims 1 to 7.

11. A global data control system for a cybersecurity of a nuclear power plant industrial control system, comprising a central control device, a nuclear power management server cluster, at least two nuclear power industrial control system clusters, a cluster spatial isolation device located between adjacent nuclear power plant system clusters, a system cluster port-side isolation device of each nuclear power plant system cluster, and a control side isolation device, wherein
the nuclear power management server cluster is configured to store nuclear power management data, the nuclear power management data comprising cybersecurity data of the nuclear power plant industrial control system;
each nuclear power industrial control system cluster is configured to store operating data of each nuclear power industrial control system cluster; and
the central control device is configured to perform the steps of the method of any one of claims 1 to 7.

12. The system according to claim 11, wherein the system cluster port-side isolation device corresponding to each nuclear power industrial control system cluster is determined according to a security level of each nuclear power industrial control system cluster, and the security level is directly proportional to a data unidirectional transmission isolation capability of the system cluster port-side isolation device.

13. The system according to claim 11, wherein the cluster spatial isolation device configured between adjacent nuclear power plant system clusters is determined according to a similarity of security levels of the adjacent nuclear power plant system clusters, and the similarity of the security levels is inversely proportional to a data unidirectional transmission isolation capability of the cluster spatial isolation device.

14. The system according to claim 11, wherein control side isolation devices comprise a first control side isolation device located between a production area and an office area in a jurisdiction area within the nuclear power plant, and a second control side isolation device located between a jurisdiction area within the nuclear power plant and a jurisdiction area outside the nuclear power plant, wherein a data unidirectional transmission isolation capability of the first control side isolation device is higher than that of the second control side isolation device.
